# EUROPÄISCHE PATENTSCHRIFT

(11) **EP 0 884 824 B1**
(45) Veröffentlichungstag und Bekanntmachung des Hinweises auf die Patenterteilung: **20.02.2002**
(21) Anmeldenummer: 98110866.5
(22) Anmeldetag: 15.06.1998
(51) Int. Cl.: H02K 1/16

(54) **Statorpaket aus unterschiedlichen Blechen für elektrische Maschinen mit Grammespulen**
Stator stack of different laminations for electrical machines with toroidal windings
Paquet statorique de tôles différentes pour machines électriques à bobinage toroidal

(30) Priorität: 15.06.1997 DE 19725273
(43) Veröffentlichungstag der Anmeldung: 16.12.1998
(73) Patentinhaber: Born, Rainer, 58455 Witten (DE)
(72) Erfinder: Born, Rainer, 58455 Witten (DE)

(56) Entgegenhaltungen:
- EP-A- 0 795 949
- DE-A- 2 103 523
- US-A- 4 563 606
- PATENT ABSTRACTS OF JAPAN vol. 008, no. 066 (E-234), 28.März 1984 & JP 58 215957 A (SHIBAURA SEISAKUSHO:KK), 15.Dezember 1983,

## Beschreibung

Die Erfindung bezieht sich auf genutete Statoren für elektrische Maschinen mit einem Blechpaket aus lamelliertem Eisen, bei dem die elektrischen Leitungen durch die Nute des Blechpakets und über die äußere Mantelfläche geführt werden. Dieses Wicklungsprinzip, auch Jochbewicklung oder Grammespulen genannt, ist aus den Anfängen des Elektromaschinenbaus bekannt.

Ein Stator mit Grammespulen und einem Blechpaket ist aus US 4563606 bekannt.

Der Nachteil der Grammespulen besteht darin, daß sich am Außenmantel magnetische Streufelder ausbilden, die den Wirkungsgrad der Maschine mindern. Wirtschaftlich genutzt werden kann deshalb dieses Wickelprinzip bisher nur bei kleineren Einphasenmaschinen mit einer Leistung bis ca. 200 Watt. Bei Einphasenmaschinen, weil diese ausgeprägtere ortsgebundene Pole bilden als Drehstrommaschinen.

Der Erfindung liegt die Aufgabe zugrunde, die Streufelder am Außenmantel zu reduzieren, um Wirkungsgrade zu erreichen, die vergleichbar und besser sind als bei Maschinen mit nur in Nute eingelegte Wicklungen.

Diese Aufgabe wird mit einem Stator gemäß Anspruch 1 gelöst.

Es ist erfindungsgemäß vorgesehen, das Statorpaket aus Blechen mit unterschiedlichen Formen zusammenzufügen, nämlich Bleche, die den Mantelleitungen, und Bleche, die den Nutleitungen zugeordnet sind. Bei gleichem Innendurchmesser sind die Mantelleitungsbleche mit größerem Außendurchmesser und größerer Nutfläche als die der Nutleitungsbleche vorgesehen.

Die unterschiedlichen Blechschnitte bewirken, daß die Induktion von Magnetfeldern in einem Blech von am Joch radial gegenüberliegenden Nut- und Mantelleitungen für einen Leitungsstrang im gleichen Blech behindert wird.

Der Effekt ist eine bessere Verteilung der magnetischen Feldlinien aus der Induktion der Mantelleitungen über mehrere Stege. Was die Streufelder am Außenmantel signifikant reduziert.

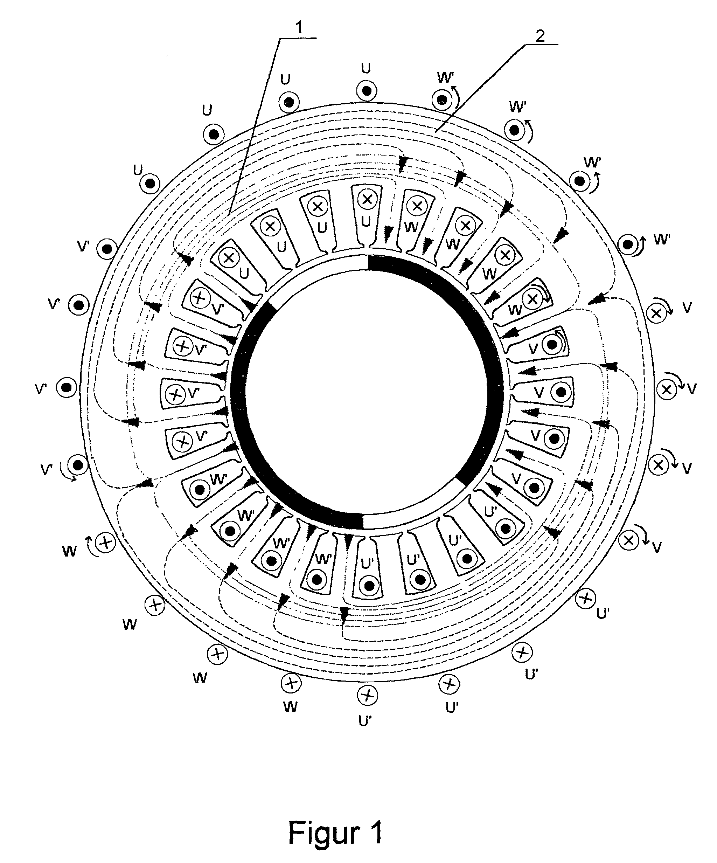

Bei einem bekannten Paket aus gleichen Blechen (Figur 1) behindern die tangential wirkenden Kraftvektoren der Nutleitungen (1) im Joch eine gleichmäßigere (sinusförmige) Verteilung der Feldlinien aus der Induktion der Mantelleitungen (2) über mehrere Stege. Was eine Verdichtung auf ein bzw. drei Stege bewirkt mit einer entsprechenden Übersättigung in diesem Bereich mit der Folge von Streufeldern am Außenmantel.

Mit der Anzahl der Nut- und Mantelleitungsbleche pro Paket können die Eigenschaften der Maschine speziell in Bezug auf den induktiven Widerstand weitgehend variiert werden. Wesentlich mehr als bei konventionellen Maschinen. Je nach Maschinentyp und Anforderungen sind alle Verhältnisse denkbar. Eine komplette Aufzählung würde den Rahmen dieser Anmeldung sprengen.

Zusätzlich ergeben sich prinzipbedingten Vorteile der Grammespulen im Vergleich zu bekannten Maschinen; dies sind:
- Wickelkopfisolierungen entfallen komplett.
- Geringere Leitungslänge durch kürzere Wickelköpfe und kleinere Anzahl Nutleitungen.
- Fertigungstechnische Vorteile mit hohem Mechanisierungspotential durch Nutzung von kostengünstigen rotierenden Wickelautomaten.
- Keine überlappenden Stränge als häufigste Ursache von Kurzschlüssen.

Der erfindungsgemäße Stator mit Grammespulen ist für alle bekannten Drehstrom- und Einphasenmaschinen unabhängig vom Erregersystem des Läufers geeignet. D. h., für alle Asynchron- und Synchronmaschinen.

Einzelheiten ergeben sich aus der nachfolgenden Beschreibung von Ausführungsformen der Erfindung, die in den Figuren der Zeichnung wiedergegeben sind; es zeigt
- Fig. 1: ein theoretisches Beispiel für den getrennt betrachteten Feldlinienverlauf aus der Induktion der äußeren und inneren Leitung im Joch einer zweipoligen Drehstrommaschine mit Grammespulen nach dem Stand der Technik.

Die Feldlinien (1) aus den Nutleitungen sind punktiert dargestellt.

Die Feldlinien aus den Mantelleitungen (2) aus Übersichtsgründen in einer gestrichelten Linie. Bei einem Motor entspricht dies der Phasenkonstellation U=100%, W und V=50% Amplitude. Das Beispiel zeigt, daß der größte Energieanteil in dieser Phasenkonstellation von den Mantelleitungen erbracht werden muß für die Richtungsänderung der Nutleitungslinien.

Einerseits ist die Richtungsänderung nur bis zu dem Punkt möglich, bei der der Luftwiderstand am äußeren Mantel größer ist als die zur Richtungsänderung erforderliche Energie. Andererseits ergibt diese Konstellation keine sinusförmige Flußdichtenverteilung über mehrere Stege zum Läufer sondern eine Verdichtung im Bereich von maximal drei Stegen. Dies führt zu einer Übersättigung mit der Folge von Streufeldern am Außenmantel.

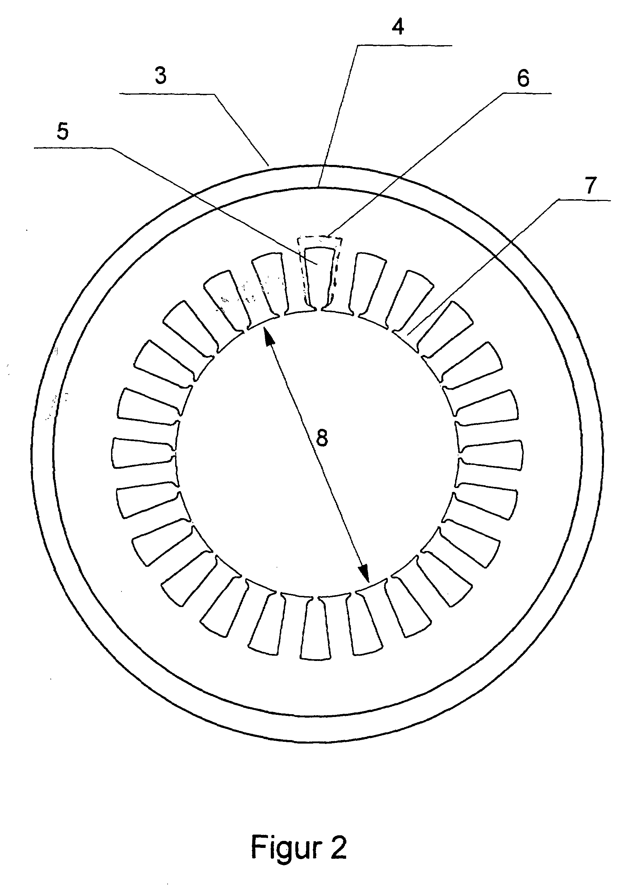

- Fig. 2: eine Draufsicht auf zwei geschichtete Bleche.

Das Mantelleitungsblech (3) mit dem größeren Außendurchmesser und größerer Nutfläche (5) als das Nutleitungsblech (4). Die Umrandung (6) der Nutfläche (5) des Mantelleitungsblechs ist hier nur als Beispiel in einer punktierten Linie für eine Nut angedeutet. Die Polschuhe (7) sowie der Innendurchmesser (8) sind bei beiden Blechen gleich, um in den kritischen Bereichen Wirbelströme zu vermeiden.

Der gleiche Nutspalt ermöglicht eine exakte Stapelung auf Bolzen mit Führungsschienen.

Die Stapelfolge bei gleicher Blechanzahl pro Paket ist vorzugsweise so auszulegen, daß mindestens jeweils zwei Bleche gleicher Form hintereinander liegen. Dadurch wird erreicht, daß der mögliche Masseschluß aufgrund von Stanzrändern unterbrochen wird. Bei anderen möglichen Stapelfolgen wie 1:2 oder 2:3 usw. ergibt sich diese Anforderung zwangsläufig.

## Patentansprüche

1. Genuteter Stator für elektrische Maschinen, mit einem Blechpaket und Grammespulen **dadurch gekennzeichnet dass**,
das gesamte Paket aus genuteten Blechen einer ersten Form und genuteten Blechen einer zweiten Form aufgebaut ist und dass, die Bleche der ersten Form einen grösseren Aussendurchmesser und eine grössere Nutfläche als die der Bleche der zweiten Form aufweisen.

2. Stator nach Anspruch 1, **dadurch gekennzeichnet, daß** eine Stapelfolge gewählt wird, bei der mindestens zwei Bleche der gleichen Form hintereinander gestapelt werden, um mögliche Masseschlüsse durch Stanzränder zu unterbrechen.

## Claims

1. Grooved stator for electical machines, with a core stack and a Gramme ring, **characterized in that** the entire stack is constructed of grooved metal sheets of a first form and grooved metal sheets of a second form an **in that** the metal sheets of the first form have a larger outer diameter an a larger grooved area than the metal sheets of the second form.

2. Stator according to claim 1, **characterized in that** a stack sequence is chosen where at least two metal sheets of the same form are stacked in series in order to interrupt possible short-circuits to ground caused by punching wheels.

## Revendications

1. Stator à encoches pour machines électriques avec un empilage de tôles et des bobines de Gramme, **caractérisé en ce que** l'ensemble de l'empilage est constitué par des tôles à encoches d'une première forme et des tôles à encoches d'une seconde forme et que les tôles de la première forma ont un plus grand diamètre extérieur et une plus grande surface d'encoches que ceux des tôles de la seconde forme.

2. Stator selon la revendication 1, **caractérisé en ce qu'**une séquence d'empilement est choisie pour laquelle au moins deux tôles de la même forme sont empilées l'une derrière l'autre pour interrompre des éventuels courts-circuits à la masse par des roues à découper.
